# EUROPEAN PATENT SPECIFICATION

(11) **EP 2 808 514 B1**
(45) Date of publication and mention of the grant of the patent: **02.03.2016**
(21) Application number: 13290118.2
(22) Date of filing: 28.05.2013
(51) Int. Cl.: F02B 37/16, F02B 37/18

(54) **Compressor Bypass Valve**
Kompressorumgehungsventil
Soupape de dérivation de compresseur

(43) Date of publication of application: 03.12.2014
(73) Proprietor: MANN + HUMMEL GMBH, 71638 Ludwigsburg (DE)
(72) Inventor: Marimbordes, Thierry, 53170 Bazougers (FR); De Cara, Gerald, 53210 Soulgé sur Ouette (FR)

(56) References cited:
- EP-A2- 2 146 071
- WO-A1-2010/031560
- DE-A1-102007 012 642
- GB-A- 1 050 333
- GB-A- 1 116 082
- GB-A- 2 042 635
- US-A1- 2006 042 246

## Description

### TECHNICAL FIELD

The present invention relates to a compressor bypass valve, in particular for a two-stage turbocharger of an internal combustion engine.

### BACKGROUND OF THE INVENTION

To increase the power of internal combustion engines in motor vehicles, it has been proposed to use exhaust gas turbochargers.

From GB 1 050 333 A a device for controlling the output flow from an I.C. engine supercharging compressor is known. A bleed valve is disposed upstream of gating means in the delivery conduit and stressing means responsive to the position of the gating means, varies the force exerted by a spring on the bleed valve. The gating means has a rotary body and an independently rotatable complementary gate, the respective orifices in walls, body and gate being eccentric to the rotational axis of body.

The document GB 1 116 082 A shows an I.C. engine including an exhaust driven turbocharger delivering air or combustible mixture via an engine driven blower to the engine inlet manifold. A return by-pass is provided around the engine driven blower and includes a recirculation valve, which opens when the pressure difference across the latter blower exceeds a certain value, The valve which is of the hit-and-miss type, has its rotatable apertured plate provided with an arm engaged by a slot in a piston.

The GB 2 042 635 A1 displays a turbocharger having a by-pass system for selectively by-passing exhaust gases from the turbine rotor. The by-pass arrangement includes a housing portion having a by-pass passage which preferably extends from the exhaust inlet to the exhaust outlet. There is a port from the exhaust inlet into the by-pass passage which is selectively controlled by a pivoted valve.

DE 10 2007 012 642 A1 discloses a device which has a bypass line comprising a cross-section surface, which is partially or fully opened or closed by a closure device of the valve device. Exhaust gas back pressure lies downstream of the valve device in the bypass line, and the closure device is designed in such a manner that the cross-section surface is closed transverse to exhaust gas compressive force that results from the exhaust gas back pressure. The closure device is axially moved along the cross-section surface and/or rotatably arranged on the surface, and is designed in the form of a flat disc.

WO 2010/031560 A1 shows a fresh gas supply device which is provided for an internal combustion engine having a turbocharger. The device includes a charge-air inlet for taking in charge-air from the exhaust gas turbocharger, a compressed air inlet for taking in compressed air, an outlet connectable to the charge-air inlet via a flap element and to the compressed air inlet via a flow regulating device, and a control unit for controlling the flap element and the flow regulating device. The flow regulating device has at least one valve for opening and closing the compressed air inlet and a proportional valve connected downstream in the direction of flow for setting a pressure in the outlet.

From US 2006/042246 A1 a turbocharger system is known which includes first and second turbines arranged such that exhaust gas passes through the first turbine then the second turbine. A bypass channel is configured such that exhaust gas entering the channel passes only through the second turbine. A valve positioned in the bypass channel regulates the flow of gas therethrough.

Document EP 2 146 071 A2 displays a passive thermatically controlled bypass valve to enable the exhaust flow to bypass the enthalpy loss incurred by driving the turbine wheel of a turbocharger, and thus more rapidly deliver heat to the catalyst or after-treatment.

One type of turbocharger is a two-stage turbocharger, which typically comprises a first-stage low-pressure turbocharger (comprising a low-pressure turbine and a low-pressure compressor) and a second-stage high-pressure turbocharger (comprising a high-pressure turbine and a high-pressure compressor) connected in series. Each of the compressors is connected to a turbine by a shaft, which communicates motion of the turbine to the corresponding compressor.

The internal combustion engine and the two-stage turbocharger system operate as follows.

Under certain engine operating conditions, some of the fresh air drawn by the compressors can be diverted around the high-pressure compressor through a compressor bypass valve, and some of the exhaust gases can be diverted around the high pressure turbine through a bypass valve.

At low engine speeds and loads, for example below around 1500 rpm ("revolutions per minute"), the high-pressure turbine bypass valve is closed and the high-pressure compressor bypass valve is closed. Exhaust gas drives both the low-pressure turbine and high-pressure turbine. Air compressed by the low-pressure compressor is further compressed by the high-pressure compressor and then supplied to the intercooler.

At higher engine speeds and loads, for example between 1500 rpm and 2750 rpm, the high-pressure turbine bypass valve is partially opened whilst the high-pressure compressor bypass valve remains closed. Exhaust gas drives both the low-pressure turbine and high-pressure turbine. The large low-pressure compressor pre-compresses the fresh air which is directed into the inlet of the high-pressure compressor where it is further compressed before entering the intercooler.

At even higher engine speeds and loads, for example between 2750 and 5000 rpm, the high-pressure turbine bypass valve is fully opened and the high-pressure compressor bypass valve opened.

Exhaust gas is directed only to the larger low-pressure turbine. Only the low-pressure compressor compresses the intake air which is directed towards the intercooler via the bypass duct. Substantially no air enters the high-pressure compressor.

The turbine and compressor bypass valves are operated in response to, among other parameters, the engine speed by an engine control unit (or "ECU").

The compressor bypass valve typically is a poppet style valve comprising a circular valve member that is urged against a flat valve seat surrounding the bypass passage opening.

During operation, the compressor bypass valve experiences high pressure on one side and lower pressure on the other side. This pressure difference ensures that the poppet valve member is urged on the valve seat. When this pressure difference is not high enough, there is provided a spring maintaining contact between the poppet valve member and the valve seat.

The spring effectively seals the high-pressure environment from the low pressure environment and ensures tightness.

When the pressure difference is reversed (this occurs when the engine is operating in bad conditions), the spring of the valve member actuator is configured to allow lifting of the valve member from the valve seat.

The spring is also configured to ensure that the valve member is moved back against the valve seat once operating conditions are back to normal. Thus, the closing response time of the valve member depends on the spring.

Due to the fact that the spring ensures two functions with opposite requirements, its development proves problematic.

Also, since the movement of the poppet valve is parallel to the pressure gradient (the poppet valve lifts from the valve seat or is urged against the valve seat), the bypass flow rate tends to be nonlinear with valve position, which makes it very difficult to properly regulate the bypass flow rate.

Besides, as the flow passes around the body of the opened valve, there is a significant amount of pressure drop or loss.

This leads to problems such as poor transient response and unsteady state operation of the turbocharger and engine system.

Finally, the bypass valve is classically manufactured from a metal.

The valve is thus relatively heavy, its manufacturing is time-consuming and costly and possibilities to modify the valve design are limited.

### SUMMARY OF THE INVENTION

The purpose of the present invention is to remedy these drawbacks by proposing a compressor bypass valve for use in a multi-stage turbocharger of an internal combustion engine, said valve comprising a valve body comprising a compressor bypass passage having an inlet and an outlet, and means for opening and closing said bypass passage comprising a valve flap.

According to the invention such said valve flap is radially movable with respect to said outlet between an opened position and a closed position.

The invention proposes a new actuation solution of the valve flap of a compressor bypass valve.

More precisely, the invention proposes a rotating valve flap, which is similar to a guillotine valve, movement of the valve being perpendicular to the pressure gradient. When the flap valve is opened, it is moved away radially from the bypass duct so that it does not obstruct the duct at all. When the flap valve is closed, it is moved radially in direction of the duct.

An advantage of such a feature is that the response time of the valve flap is less dependent on pressures forces compared to a poppet valve for instance.

In other words, there is nearly no impact of the pressure difference on each side of the flap on response time.

Rapid opening and closing of the valve flap can be ensured in this manner.

Indeed, the effort to move the valve flap, which is linked to the pressure difference between each side of the flap, is reduced.

Thus, impact stresses on the valve flap when closing are reduced.

Also, the pressure loss of the valve when in its opened position is improved since the flow does not need to pass around the valve body as in the prior art poppet valve.

In accordance with another aspect of the present invention, said valve flap is movable around a rotation axis which is parallel to the longitudinal axis of said outlet.

Movement of the valve flap is substantially parallel to the surface of the outlet.

In accordance with another aspect of the present invention, said outlet provides a seat against which said valve flap is in contact when in its closed position, said seat being inclined with respect to said longitudinal axis of said outlet.

The seat is inclined with respect to the plane perpendicular to said outlet longitudinal axis.

The connection between the flap and its rotation axis allows a relative movement of these two elements in order to ensure tightness between the seat and the flap.

In accordance with another aspect of the present invention, said valve flap comprises an umbrella valve.

When the pressure difference is reversed, the safety function is achieved thanks to a dedicated device, i.e. an umbrella valve carried by the flap and is self-actuating.

Thus, the spring integrated in the actuator means plays no role in the safety function, as opposed to the spring used in the poppet valve of the prior art, the actuator spring being only linked to the valve response time.

In accordance with another aspect of the present invention, means for opening and closing said bypass passage further comprise an actuator for said valve flap, said actuator being operable by command from a controller, said controller being responsive to engine speed.

In accordance with another aspect of the present invention, said actuator is pneumatically actuated or electrically actuated.

In accordance with another aspect of the present invention, said valve body is made of plastics.

In accordance with another aspect of the present invention, said valve flap is made of plastics.

### BRIEF DESCRIPTION OF THE DRAWINGS

The features of the compressor bypass valve which is the subject of the invention are described in greater detail by referring to the attached non limiting drawings in which:
Figure 1 is an exploded view of a compressor bypass valve according to an embodiment of the invention;
Figures 2 and 3 are respectively partial views in perspective and from the top of the bypass valve of the invention showing the flap in its closed position;
Figure 4 is a sectional view along lines B-B of Figure 3;
Figure 5 is a perspective view showing the body of the bypass valve of the invention and the flap in its closed position;
Figures 6 and 7 are respectively partial views in perspective and from the top of the bypass valve of the invention showing the flap in its opened position;
Figure 8 is a sectional view along lines A-A of Figure 7;
Figure 9 is a perspective view showing the body of the bypass valve of the invention and the flap in its opened position;
Figure 10 is a partial view showing the flap actuations means body of the bypass valve of the invention.

### DETAILED DESCRIPTION

A detailed description of an exemplary embodiment of the invention follows with reference to the figures provided.

The actuation and operation of the compressor bypass valve 1 of the invention will now be described when implemented in a two-stage turbocharger of an internal combustion engine of a motor vehicle.

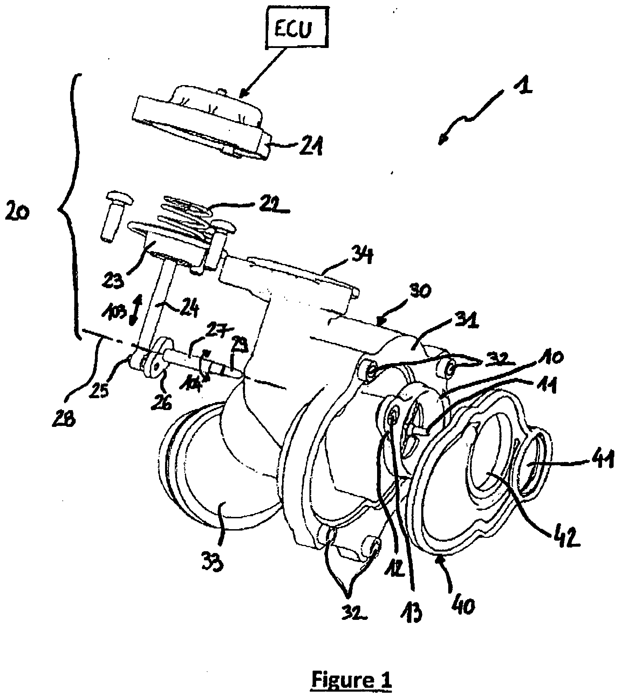

Compressor bypass valve 1, which is represented in the exploded view of figure 1, comprises a valve body 30 defining an air enclosure.

Compressor bypass valve 1 also comprises actuating means 20 accommodated therein, a flap 10 mounted on the actuating means 20 and an overmolded flange 40 with two through-holes 41, 42.

It is to be noted that the diameter of through-hole 42 is larger than through-hole 41.

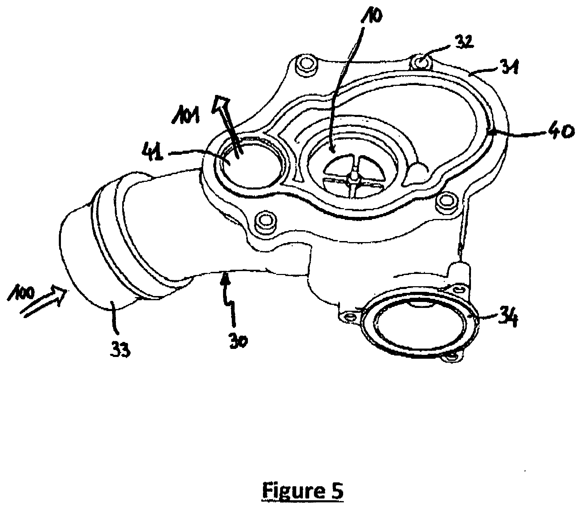

As illustrated in Figure 5, the flap 10 is mounted inside the valve body 30 and cooperates with the overmolded flange 40, the latter being configured to be mounted flush with the flange 31 of the bypass valve body 30.

The bypass valve 1 when assembled is mounted on the body of the high-pressure compressor (not represented) of the two-stage turbocharger. The flange 31 of the bypass valve body 30 comprises four holes 32 for a screw connection to a flange of the high-pressure compressor body.

As explained previously, the bypass valve 1 is part of an air recirculation loop bypassing the high-pressure compressor.

The actuator 21 of compressor bypass valve 1 is operated in response to, among other parameters, the engine speed by an engine control unit (ECU).

Depending on engine conditions, the bypass valve 1 routes the compressed air from the low-pressure compressor into the high-pressure compressor, or shuts off the air path to the high-pressure compressor, directing the compressed air from the low-pressure compressor to the intercooler.

The bypass valve 1 comprises one air inlet opening 33 at one end and two air outlet openings 41, 42 at another end.

The bypass duct or passage is located between the air inlet 33 in which the compressed air from the low-pressure compressor is directed and the air outlet defined by the through-hole 42 of flange 40.

The bypass valve 1 comprises a rotating valve member, or flap, 10 which closes or opens the through-hole 42, and thus the bypass duct. The rotation axis 28 of flap 10 is parallel to the axis 44 of through-hole 42. The flap 10 thus moves in a plane parallel to the plane of the flange 40.

Rotating movement of the flap 10 around axis 28 is controlled by actuator means 20 as shown in Figure 1.

Figure 5 shows the flap 10 of the bypass valve 1 in its closed position. For reasons of clarity, the actuator 10 is not represented in this figure.

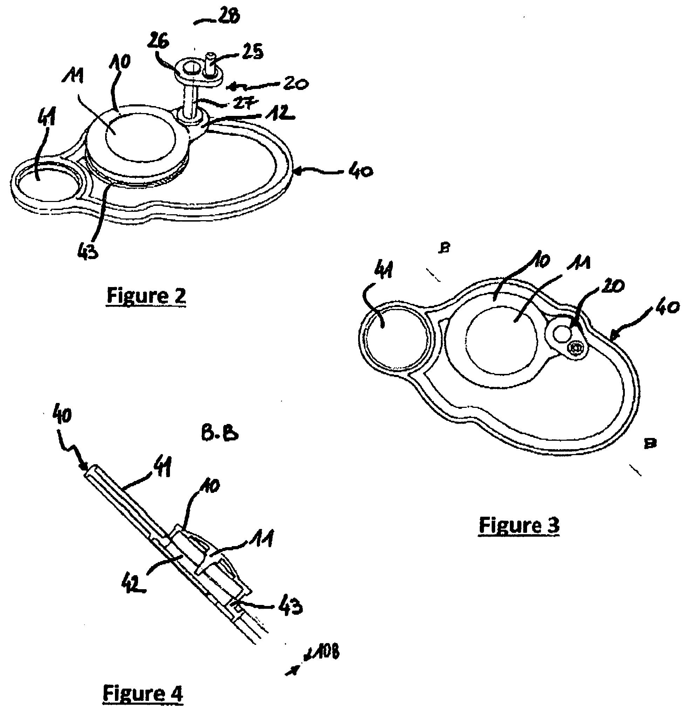

Figures 2 and 3 are respectively partial views in perspective and from the top of the bypass valve 1 of the invention showing the flap 10 in its closed position, closing the through-hole 42 of overmolded flange 40 and thus the bypass duct (the through-hole 41 is not closed).

When the flap 10 is closed, it is urged or pressed against the seat 43 of the through-hole 42 by the pressure forces. This is clearly shown in Figure 4, which is a sectional view along lines B-B of Figure 3.

Air compressed by the low-pressure compressor enters the bypass valve body 30 via inflow duct 33 (the inflow direction is indicated by the arrow marked with reference numeral 100) and is thus directed (the outflow direction is indicated by the arrow marked with reference numeral 101) to the inlet of the high-pressure compressor via through-hole 41. It is then further compressed by the high-pressure compressor and supplied to the intercooler.

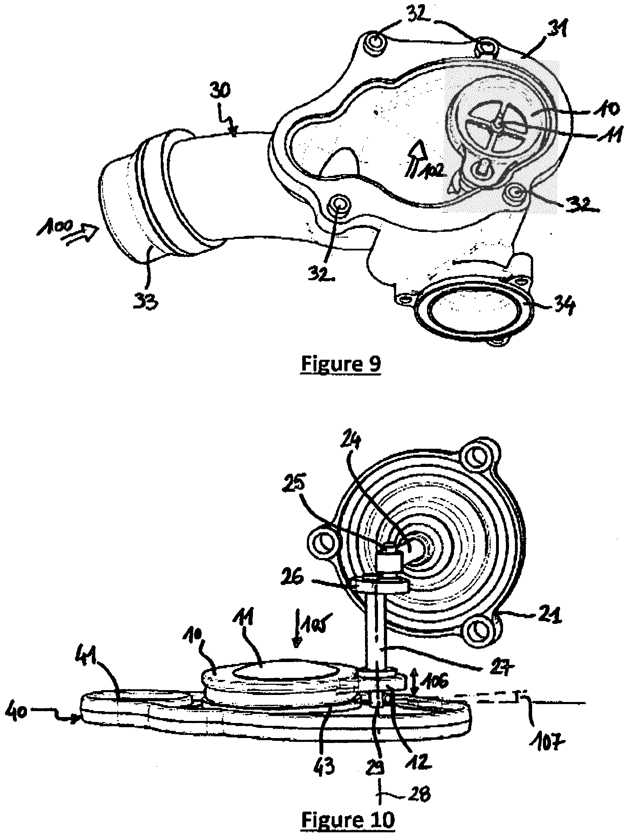

Figure 9 shows the flap 10 of the bypass valve 1 in its opened position.

The flap 10 has moved around axis 28 and is now located on one side of the through-hole 42.

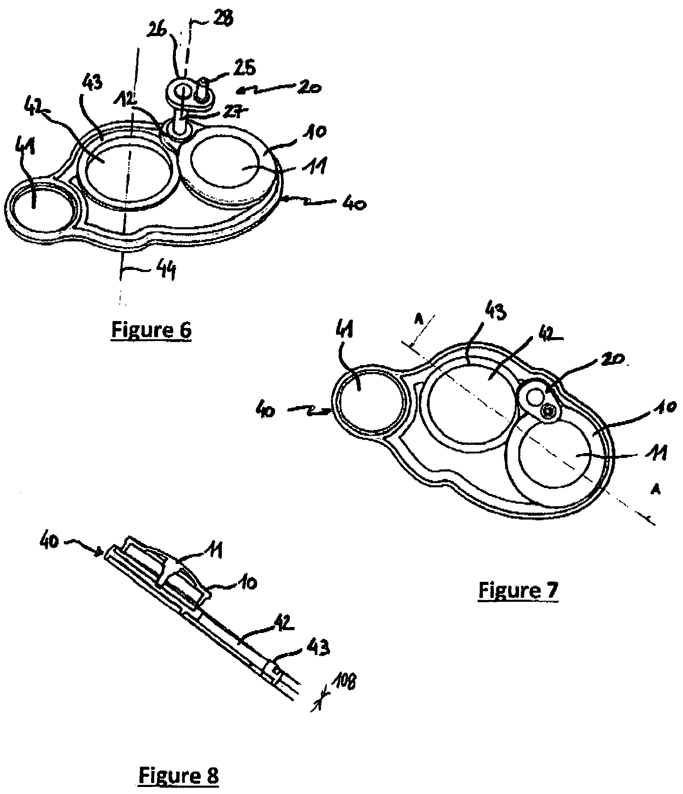

Figures 6 and 7 are respectively partial views in perspective and from the top of the bypass valve 1 of the invention showing the flap 10 in its opened position. The through-hole 42 of overmolded flange 40 is completely opened and so is the bypass duct (the through-hole 41 is not closed either).

Position of the flap with respect to the overmolded flange 40 is clearly shown in Figure 8, which is a sectional view along lines A-A of Figure 7.

When the flap 10 is opened, air compressed by the low-pressure compressor (arrow 100) is directed to the outlet of the bypass duct, via the through-hole 42 (the outflow direction is indicated by the arrow marked with reference numeral 102), bypassing the high-pressure compressor.

Air is thus diverted around the high-pressure compressor through the compressor bypass duct. Only the low-pressure compressor compresses the intake air which is directed towards the intercooler via the bypass duct.

Substantially no air enters the high-pressure compressor even if the through-hole 41 remains opened (its diameter being inferior to the diameter of through-hole 42 which is also opened).

Actuation for the bypass valve 10 is detailed in Figure 1. The actuating means 20 comprise an actuator 21, which is a pneumatic actuator controlled by an on/off valve. In an alternative embodiment, the actuator 21 is an electrical actuator.

The actuator 21 is mounted on the flange 34 of the bypass valve housing 30 by screws. When vacuum is applied, the actuator 21 controls the opening of the flap 10. When vacuum is cut, the actuator 21 is brought back to its initial position by a spring 22 mounted in a housing of the actuator base 23, and the flap 10 is closed.

The actuator 21 is linked to an actuator rod 22. Movement of the actuator 21 is transmitted to the actuator rod 22 (movement of the actuator rod 22 is indicated by the arrow marked with reference numeral 103). Movement of the actuator rod 22 is transmitted via a pin 25 and a cam 26 to a long bearing 27, which extends perpendicularly to the actuator rod 22 and coaxially with the flap rotation axis 28. The long bearing 27 rotates around the flap rotation axis 28 when the actuator rod 22 is moved in translation (movement of the long bearing 27 is indicated by the arrow marked with reference numeral 104). The flap 10 comprises a circular frame prolonged by an extension 12 having a through-hole 13 in which the extremity 29 of the long bearing 27 is fitted.

The flap 10 being mounted in a fixed manner on the long bearing 27, the flap 10 rotates in one direction or the other when the actuator rod 22 is moved in translation.

The flap 10 functions like a guillotine. In other words, the flap 10 closes or opens completely the through-hole 42 of overmolded flange 40, and thus the bypass duct of the bypass valve 1.

Since movement of the flap 10 is perpendicular to pressure gradient, the effort to move the flap 10, which is linked to pressure difference across the flap 10, is minimized. In other words, response time is not, or at least less, dependent on pressure forces and pressure difference across the flap 10.

Also, when closing, the flap 10 is submitted to less impact stresses.

Advantageously, when the flap 10 is opened, the path to the outlet is kept free from any disturbance from the flap 10, since the air does not need to get around the opened flap 10 as in the case of a poppet valve. Pressure loss of the valve when opened is consequently highly optimized.

As illustrated in Figures 4 and 8, the valve seat 43 surrounding through-hole 42 is inclined by an angle 108 equal to 3° in this embodiment (values between 0 and 5° (or more) for instance may also be selected) with respect to the plane perpendicular to the outlet longitudinal axis 44.

When the flap closes the through-hole 42, and thus the bypass passage, the flap 10 is inclined with respect to the plane perpendicular to the rotation axis 28 by an angle 107 equal to 3°. This slight inclination of the flap 10 is possible because, as shown in Figure 10, the mounting of the flap 10 on the long bearing 27 allows the flap 10 to move on a short distance 106 along its rotation axis 28.

An advantage of such an arrangement is that tightness when the flap 10 is positioned on the valve seat 43 in its closed position is improved.

In other words, the closing of the flap 10 is more secure.

Another advantage of such an arrangement is that there is less friction between the flap 10 and the valve seat 43 when the flap 10 moves from its closed position to its opened position, and vice versa.

The actuating means 20 thus requires less power to move the flap 10 and the wear of the surface of the flap 10 in contact with the valve seat 43 is minimized.

Such an approach guarantees good durability of the flap 10.

In figure 10, the pressure force indicated by the arrow 105 presses the flap 10 on the valve seat 43.

In case the pressure difference is reversed, a safety function is implemented in the bypass valve 1.

Instead of being integrated in the actuator means 20 by means of a spring as in the poppet valves of the prior art, the safety function is achieved thanks to a dedicated device, i.e. an umbrella gasket, also called umbrella check valve or umbrella valve, 11.

The elastomeric umbrella gasket 11 is mounted by fastening means, such as one or more clips, on the flap 10 of the bypass valve 1. In normal operating conditions, the pressure difference between each side of the flap 10 ensures the tightness between the umbrella gasket 11 and the flap 10 (i.e. it is normally closed).

When the reverse pressure difference reaches a predetermined level (which can be tuned with the shape and thickness of the umbrella gasket 11), the umbrella gasket 11 warps and let the air flow through it (it is thus self-actuating and allows flow in one direction).

Thus, the umbrella gasket 11 operates like a self-actuating non-return valve. The actuator spring 22 plays no part in the safety function, but has only an effect on the flap 10 closing/opening response time.

The bypass valve 1 (i.e. the valve body 30, actuating means 20, flap 10, flange 40) is made of plastics or any other suitable material resistant to the temperatures and pressures that occur. The valve flap 10 is made of a low friction coefficient material.

This solution is cheaper and lighter, the manufacturing is less time-consuming and costly than metal valves and design changes are possible.

The use of plastics to manufacture the bypass valve 1 further allows a more compact design of the valve body 30, and minimizes the manufacturing costs.

The above embodiments are to be understood as illustrative examples of the invention.

Further embodiments of the invention are envisaged. It is to be understood that any feature described in relation to one embodiment may also be used in other of the embodiments. Furthermore, equivalents and modifications not described above may also be employed without departing from the scope of the invention, which is defined in the accompanying claims.

Throughout the description and claims of this specification, the words "comprise" and "contain" and variations of them mean "including but not limited to", and they are not intended to (and do not) exclude other components.

## Claims

1. A compressor bypass valve (1) for use in a multi-stage turbocharger of an internal combustion engine, said valve (1) comprising a valve body (30) comprising a compressor bypass passage (33, 42) having an inlet (33) and an outlet (42), and means for opening and closing said bypass passage (33, 42) comprising a valve flap (10), wherein
said valve flap (10) is radially movable with respect to said outlet (42) between an opened position and a closed position, **characterized in that** said outlet (42) provides a seat (43) against which said valve flap (10) is in contact when in its closed position, said seat (43) being inclined with respect to the plane perpendicular to said outlet longitudinal axis (44).

2. A compressor bypass valve (1) according to claim 1, **characterized in that** said valve flap (10) is movable around a rotation axis (28) which is parallel to the longitudinal axis (44) of said outlet (42).

3. A compressor bypass valve (1) according to any one of claims 1 or 2, **characterized in that** said valve flap (10) is movable in a direction parallel to said rotation axis (28).

4. A compressor bypass valve (1) according to any one of claims 1 to 3, **characterized in that** said valve flap (10) comprises an umbrella valve (11).

5. A compressor bypass valve (1) according to any one of claims 1 to 4, **characterized in that** means for opening and closing said bypass passage further comprise an actuator (21) for said valve flap (10), said actuator (21) being operable by command from a controller (ECU), said controller being responsive to engine speed.

6. A compressor bypass valve (1) according to claim 5, **characterized in that** said actuator (21) is pneumatically actuated or electrically actuated.

7. A compressor bypass valve (1) according to any one of claims 1 to 6, **characterized in that** said valve body (30) is made of plastics.

8. A compressor bypass valve (1) according to any one of claims 1 to 7, **characterized in that** said valve flap (10) is made of plastics.

## Patentansprüche

1. Verdichterbypassventil (1) für die Verwendung in einem mehrstufigen Turbolader einer Brennkraftmaschine, wobei das Ventil (1) einen Ventilkörper (30) umfasst, umfassend einen Verdichterbypasskanal (33, 42) mit einem Einlass (33) und einem Auslass (42), und Mittel zum Öffnen und Schließen des Bypasskanals (33, 42), umfassend eine Ventilklappe (10), wobei
die Ventilklappe (10) radial verschiebbar bezüglich des Auslasses (42) zwischen einer Offenposition und einer Schließposition ist, **dadurch gekennzeichnet, dass** der Auslass (42) einen Sitz (43) vorsieht, gegen welchen die Ventilklappe (10) in ihrer Schließstellung in Kontakt ist, wobei der Sitz (43) bezüglich der Ebene senkrecht zur Längsachse (44) des Auslasses geneigt ist.

2. Verdichterbypassventil (1) nach Anspruch 1, **dadurch gekennzeichnet, dass** die Ventilklappe (10) um eine Rotationsachse (28), welche parallel zur Längsachse (44) des Auslasses (42) verläuft, verschiebbar ist.

3. Verdichterbypassventil (1) nach einem der Ansprüche 1 oder 2, **dadurch gekennzeichnet, dass** die Ventilklappe (10) in eine Richtung parallel zur Rotationsachse (28) verschiebbar ist.

4. Verdichterbypassventil (1) nach einem der Ansprüche 1 bis 3, **dadurch gekennzeichnet, dass** die Ventilklappe (10) ein Schirmventil (11) umfasst.

5. Verdichterbypassventil (1) nach einem der Ansprüche 1 bis 4, **dadurch gekennzeichnet, dass** Mittel zum Öffnen und Schließen des Bypasskanals außerdem ein Stellglied (21) für die Ventilklappe (10) umfassen, wobei das Stellglied (21) durch einen Befehl vom Regler (ECU) bedienbar ist, wobei der Regler auf die Motordrehzahl reagiert.

6. Verdichterbypassventil (1) nach Anspruch 5, **dadurch gekennzeichnet, dass** das Stellglied (21) pneumatisch betätigt oder elektrisch betätigt wird.

7. Verdichterbypassventil (1) nach einem der Ansprüche 1 bis 6, **dadurch gekennzeichnet, dass** der Ventilkörper (30) aus Kunststoff ist.

8. Verdichterbypassventil (1) nach einem der Ansprüche 1 bis 7, **dadurch gekennzeichnet, dass** die Ventilklappe (10) aus Kunststoff ist.

## Revendications

1. Soupape de dérivation de compresseur (1) pour l'utilisation dans un turbocompresseur à plusieurs étages d'un moteur à combustion interne, laquelle soupape (1) comprend un corps de soupape (30) comprenant un passage de dérivation de compresseur (33, 42) avec une entrée (33) et une sortie (42), et des moyens pour ouvrir et fermer ledit passage de dérivation (33, 42) comprenant un clapet de soupape (10),
ledit clapet de soupape (10) étant mobile dans le sens radial par rapport à ladite sortie (42) entre une position ouverte et une position fermée, **caractérisée en ce que** ladite sortie (42) prévoit un siège (43) contre lequel ledit clapet de soupape (10) est en contact quand il est en position fermée, ledit siège (43) étant incliné par rapport au plan perpendiculaire audit axe longitudinal de sortie (44).

2. Soupape de dérivation de compresseur (1) selon la revendication 1, **caractérisée en ce que** ledit clapet de soupape (10) est mobile autour d'un axe de rotation (28) qui est parallèle à l'axe longitudinal (44) de ladite sortie (42).

3. Soupape de dérivation de compresseur (1) selon l'une quelconque des revendications 1 ou 2, **caractérisée en ce que** ledit clapet de soupape (10) est mobile dans une direction parallèle audit axe de rotation (28).

4. Soupape de dérivation de compresseur (1) selon l'une quelconque des revendications 1 à 3, **caractérisée en ce que** ledit clapet de soupape (10) comprend une soupape parapluie (11).

5. Soupape de dérivation de compresseur (1) selon l'une quelconque des revendications 1 à 4, **caractérisée en ce que** des moyens pour ouvrir et fermer ledit passage de dérivation comprennent en outre un actionneur (21) pour ledit clapet de soupape (10), lequel actionneur (21) pouvant être actionné par une commande d'un contrôleur (ECU), ledit contrôleur répondant à la vitesse du moteur.

6. Soupape de dérivation de compresseur (1) selon la revendication 5, **caractérisée en ce que** ledit actionneur (21) est à actionnement pneumatique ou à actionnement électrique.

7. Soupape de dérivation de compresseur (1) selon l'une quelconque des revendications 1 à 6, **caractérisée en ce que** ledit corps de soupape (30) est fait de plastique.

8. Soupape de dérivation de compresseur (1) selon l'une quelconque des revendications 1 à 7, **caractérisée en ce que** ledit clapet de soupape (10) est fait de plastique.
